# EUROPÄISCHE PATENTSCHRIFT

(11) **EP 1 260 485 B1**
(45) Veröffentlichungstag und Bekanntmachung des Hinweises auf die Patenterteilung: **23.08.2006**
(21) Anmeldenummer: 01112677.8
(22) Anmeldetag: 25.05.2001
(51) Int. Cl.: C02F 3/10

(54) **Vorrichtung zur biologischen Fluidbehandlung**
Device for the biological treatment of fluids
Dispositif de traitement biologique des fluides

(43) Veröffentlichungstag der Anmeldung: 27.11.2002
(73) Patentinhaber: GRUNDFOS A/S, DK-8850 Bjerringbro (DK)
(72) Erfinder: Jensen, Erik, 8830 Tjele (DK); Paulsen, Jens Christian, 8850 Bjerringbro (DK)
(74) Vertreter: Vollmann, Heiko

(56) Entgegenhaltungen:
- EP-A- 0 381 305
- DE-A- 4 441 866
- GB-A- 1 418 348
- US-A- 3 466 241
- US-A- 4 157 303

## Beschreibung

Die Erfindung betrifft eine Vorrichtung zur biologischen Fluidbehandlung gemäß den im Oberbegriff des Anspruchs 1 angegebenen Merkmalen.

Insbesondere bei der Abwasserbehandlung werden biologische Reinigungsstufen eingesetzt, die aerob oder anaerob arbeiten. Dabei handelt es sich um sogenannte Trägerbiologien, d. h. um Mikroorganismen, die auf einem Trägermaterial mit großer Oberfläche fixiert sind, längs der das zu behandelnde Fluid geführt ist. Ein solches Verfahren ist beispielsweise aus EP 0 470 931 A2 bekannt.

Ein Problem dieser mit Mikroorganismen behafteten Flächen ist, dass sich die Oberflächenaktivität mit wachsender Schichtdicke ändert, da mit zunehmender Schichtdicke die unten liegenden Mikroorganismen schlechter versorgt werden und damit weniger aktiv am Prozess teilnehmen können. Die überschüssigen Mikroorganismen sind daher in regelmäßigen Abständen von den Flächen zu entfernen und der sich daraus absetzende Schlamm abzuführen, was üblicherweise durch Rückspülen erfolgt.

Ein weiteres Problem bei geschlossenen Reaktoren, bei denen das Fluid kanalgeführt ist und bei denen die meist filigranen Kanalwandungen als Haftflächen für die Mikroorganismen dienen, liegt darin, dass sich die Kanäle mit zunehmender Schichtdicke der Mikroorganismen zusetzen, d. h. nur mit erhöhtem Widerstand durchströmbar sind, wodurch die Aktivität ebenfalls abnimmt.

Aus US-A-3,466,241 ist eine Vorrichtung zur biologischen Fluidbehandlung bekannt, bei der das Fluid eine Wanne durchströmt, in welche zwei rotierende Scheibenstapel eintauchen auf deren Scheiben Mikroorganismen angeordnet sind, welche der Abwasserbehandlung dienen. Das Wasser durchströmt das wannenförmige Becken dabei im Wesentlichen in Achsrichtung der Scheibenstapel, so dass die einzelnen Scheiben nacheinander umströmt werden.

Der vorliegenden Erfindung liegt die Aufgabe zugrunde, eine gattungsgemäße Vorrichtung so auszubilden, dass sie bei möglichst kleiner Baugröße effektiv arbeitet und darüber hinaus das Anwachsen der Mikroorganismen zu verlässig begrenzt.

Diese Aufgabe wird gemäß der Erfindung durch die in Anspruch 1 angegebenen Merkmale gelöst. Vorteilhafte Ausgestaltungen der Erfindungen sind in den Unteransprüchen der nachfolgenden Beschreibung sowie der Zeichnung angegeben

Bei der erfindungsgemäßen Vorrichtung bilden die Flächen Teile von Scheiben bzw. Scheibenpaketen, die im Wesentlichen parallel zueinander und überlappend angeordnet sind, so dass sich bei geeigneter Wahl und Anordnung von Platten und Antrieb eine extrem kompakte Bauform ergibt, bei der zudem der überschüssige Teil der Mikroorganismen kontinuierlich entfernt werden kann. Dabei werden die Flächen vorteilhaft durch in den Scheiben liegenden Nuten gebildet und das Fluid durch diese Nuten geführt. Die Nuten sind dabei zur gegenüber liegenden Scheibe hin offen ausgebildet, so dass diese gegenüberliegende Scheibe zusammen mit der Nut einen Kanal zur Fluidüberführung bildet. Die Scheiben sind dabei vorzugsweise ringförmig, so dass eine zentrale Fluidzufuhr durch die innere Ausnehmung der Plattenstapel und die Abfuhr über die Außenseite erfolgen kann oder umgekehrt. Die Nuten sind dabei im Wesentlichen radial oder zumindest auch radial gerichtet, beispielsweise so, dass die Nut begrenzenden Kanten gegenüberliegender Scheiben so angeordnet sind, dass sie bei Rotation stets im gleichen Winkel aufeinander treffen. Vorteilhaft ist die Vorrichtung hermetisch abgeschlossen oder in einem hermetisch abschließbares Leitungssystem integrierbar, so dass sie mit einem reaktionsfördernden Gas, beispielsweise Luft druckbeaufschlagbar ist, um einen aeroben Reaktionsvorgang zu beschleunigen.

Bei der erfindungsgemäßen Vorrichtung wird der überschüssige Teil von Mikroorganismen von der behafteten Fläche mechanisch gelöst und über den Fluidstrom entfernt. Hierdurch wird ein kontinuierlicher Betrieb möglich, wobei der ablaufende Reaktionsprozess wesentlich exakter steuerbar ist als bei Vorrichtungen nach dem Stand der Technik. Dabei ist es wichtig, eine Wachstumsgrundlage für den weiteren mikrobiologischen Prozess zu erhalten. Hierzu sind die Flächen, an denen sich die Mikroorganismen anlagern vorzugsweise aus einem porösen oder Rauhigkeiten aufweisenden Material und/oder in ihrer Oberfläche strukturiert.

Ein mechanisches Lösen des überschüssigen Teils von Mikroorganismen von der Fläche kann auch unter Ausnutzung der Zentrifugalkraft erfolgen. Hierbei besteht die Möglichkeit, die Schichtdicke der Mikroorganismen zu variieren, indem die Antriebsdrehzahl entsprechend variiert wird. Je höher die Antriebsdrehzahl des Rotationskörpers gewählt wird, desto mehr Mikroorganismen werden zentrifugalkraftbedingt entfernt und desto dünner wird sich die Schichtdicke der Mikroorganismen einstellen.

Die mit Mikroorganismen behafteten Flächen sind Teile von Scheiben bzw. Scheibenpakten, die im Wesentlichen parallel zueinander und überlappend angeordnet sind, so dass sich bei geeigneter Wahl und Anordnung von Platten und Antrieb eine extrem kompakte Bauform ergibt, bei der zudem der überschüssige Teil der Mikroorganismen kontinuierlich entfernt werden kann.

Die Erfindung ist nachfolgend anhand von in der Zeichnung dargestellten Ausführungsbeispielen näher erläutert. Es zeigen:
- Fig. 1: in stark vereinfachter und perspektivischer Darstellung eine Vorrichtung mit zwei gegenüberliegenden und mit Mikroorganismen behafteten Flächen, bei der durch Verformung der Flächen überschüssige Mikroorganismen entfernen können (nicht Gegenstand der Erfindung),
- Fig. 2a, b, c: in vergrößerter Darstellung die Einzelheit II in Fig. 1 in drei unterschiedlichen Verformungsstellungen (nicht Gegenstand der Erfindung)
- Fig. 3: in schematischer, perspektivischer Darstellung eine mit Mikroorganismen behaftete Fläche mit einem mechanischen Abstreife (nicht Gegenstand der Erfindung)
- Fig. 4: in schematischer Längsschnittdarstellung eine Vorrichtung, bei der überschüssige Mikroorganismen durch Zentrifugalkraft entfernt werden (nicht Gegenstand der Erfindung),
- Fig. 5: in schematischer Längsschnittdarstellung eine Vorrichtung, bei der die behafteten Flächen an zwei miteinander in Eingriff stehenden Scheibenstapeln vorgesehen sind,
- Fig. 6: die Draufsicht auf eine Scheibe des inneren Scheibenstapels,
- Fig. 7: eine Seitenansicht der Scheibe in Fig. 6,
- Fig. 8: eine Draufsicht auf eine Scheibe des äußeren Scheibenstapels,
- Fig. 9: eine Draufsicht entsprechend Fig. 6 einer alternativen Scheibenausführung,
- Fig. 10: eine Draufsicht gemäß Fig. 8 einer alternativen Scheibenausführung und
- Fig.11: den Aufbau einer solchen Vorrichtung mit Inline-Anschlüssen.

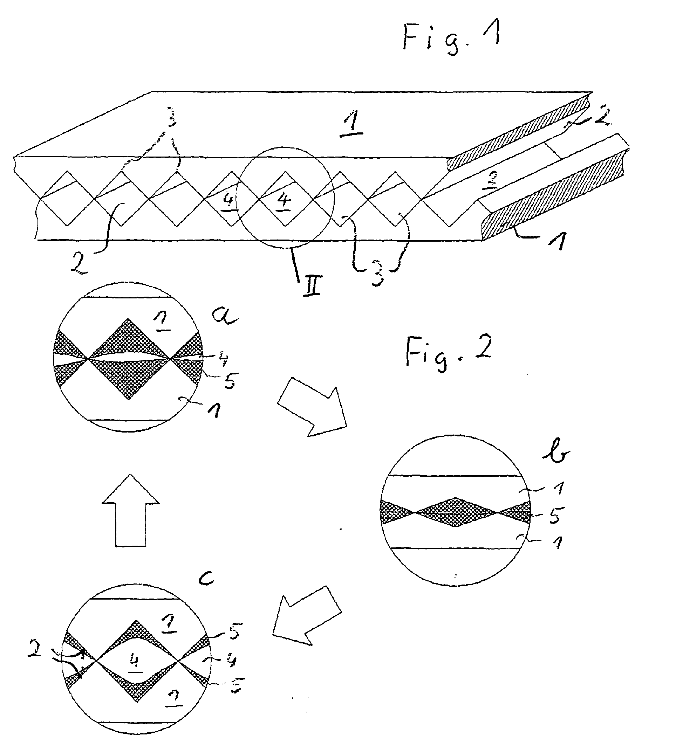

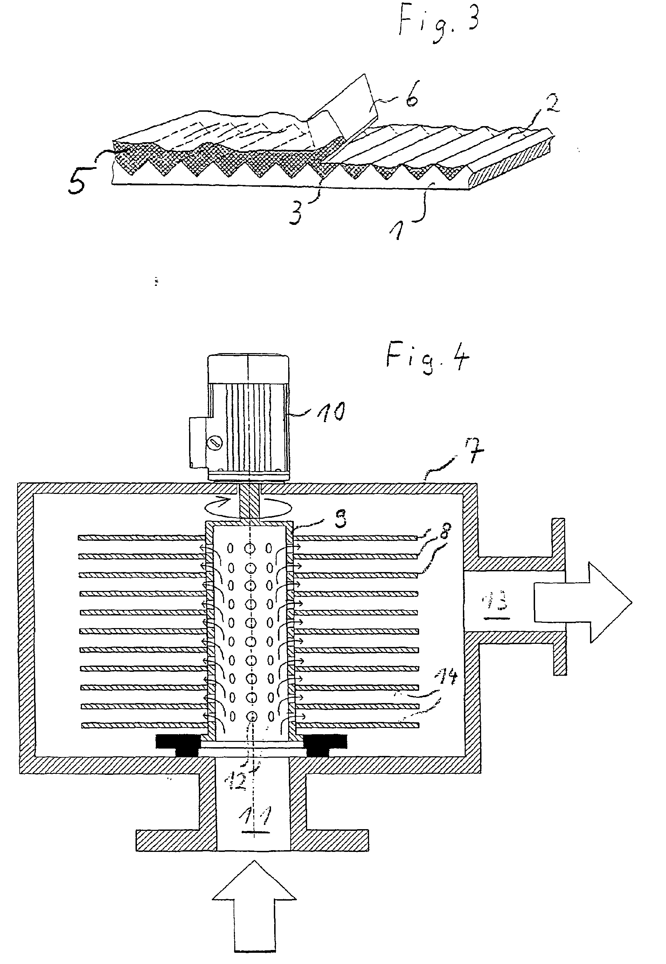

Anhand der Figuren 1 und 2 ist ein Prinzip dargestellt, wie durch Verformung von Flächen überschüssige Mikroorganismen entfernt werden können. Vorgesehen sind hierzu zwei elastische, im Wesentlichen sich flächig erstreckende Körper 1, die an gegenüberliegenden Seiten Flächen 2 aufweisen, die zum Anhaften von Mikroorganismen vorgesehen sind. Hierzu sind die zueinander weisenden Seiten der Körper 1 mit im Querschnitt dreieckigen Nuten 3 versehen, derart, dass gegenüberliegende Nuten 3 jeweils einen im Querschnitt etwa quadratischen Kanal 4 bilden. Die mit Mikroorganismen behafteten Flächen 2 begrenzen dabei die Kanäle 4, wobei das zu behandelnde Fluid durch die Kanäle 4 geführt ist.

Im Betrieb strömt das Fluid längs der Kanäle 4 und reagiert dabei mit den an den Flächen 2 anhaftenden Mikroorganismen 5 (Fig. 2). Mit zunehmendem Schichtwachstum verringert sich der Durchströmungsquerschnitt der Kanäle 4, so wie es beispielhaft in Fig. 2a dargestellt ist. Dann müssen die überschüssigen Mikroorganismen entfernt werden, um die Funktionsfähigkeit der Vorrichtung zu gewährleisten. Hierzu werden die Flächen 2 verformt, indem die Körper 1 so aufeinander gepresst werden, dass sich die in Fig. 2b dargestellte Konstellation ergibt, bei der die Mikroorganismen 5 gegenüberliegender Nuten 3 aufeinander stoßen. Die vorbeschriebene Bewegung der Körper 1 zueinander kann entweder durch Druckbeaufschlagung von den Rückseiten und/oder Zugbeaufschlagung querzu den Nuten 3 erfolgen. Hierbei verformen sich die Körper 1 elastisch in die in Fig. 2b dargestellte Position. Nach Entlastung (Fig. 2c) richten sich die Kanäle 4 wieder auf, wobei beim erneuten Fluiddurchströmen die überschüssigen Mikroorganismen 5 aus den Kanälen 4 abgeführt werden, wodurch die gewünschte Schichtdicke von Mikroorganismen wiederhergestellt wird.

Bei der anhand von Fig. 3 dargestellten Ausführungsvariante weist der Körper 1 die gleich Form wie bei der anhand von Fig. 1 dargestellten Ausführungsform auf, ist jedoch nicht paarweise angeordnet. Auch dort sind im Querschnitt dreieckige Nuten 3 vorgesehen, deren Wandungen Flächen 2 bilden, an denen Mikroorganismen 5 anhaften. Das Fluid strömt hier längs der Flächen 2 in Richtung des Nutverlaufs. Auch hier wächst die Schichtdicke der Mikroorganismen 5 im Laufe der Zeit an. Um die überschüssigen Mikroorganismen zu entfernen, ist hier ein mechanischer Abstreifer 6 vorgesehen, der längs der Oberseite des Körpers 1 mittels eines zum Beispiel elektrischen, hydraulischen oder pneumatischen Antriebs verfahrbar ist und der den über die Oberseite des Körpers 1 überstehenden Teil der Mikroorganismen 5 mechanisch abschält. Durch den mechanischen Abstreifer 6 wird hier die Schichtdicke der Mikroorganismen 5 eingestellt. Die Abfuhr der abgetrennten Mikroorganismen 5 erfolgt mittels des Fluids.

Die anhand der Figuren 1 und 2 bzw. 3 dargestellten Flächen 2, die nach den vorstehend erläuterten Prinzipien von überschüssigen Mikroorganismen befreit werden, sind in einem geeigneten geschlossenen und hermetisch abschließbaren Behältnis angeordnet, so wie dies in Fig. 4 beispielhaft dargestellt ist. Dabei kann das Behältnis zur Beschleunigung des mikrobiologischen Vorgangs mit Druck beaufschlagt werden.

In Figur 4 ist ein Behältnis 7 vorgesehen, in dem ein Stapel von mit Abstand und parallel zueinander angeordneten Scheiben 8 auf einer Hohlwelle 9 angeordnet ist, der von einem außerhalb des Behältnisses 7 angeordneten Motor 10 rotatorisch antreibbar ist. Das Innere der Hohlwelle 9 steht mit einem Einlasskanal II in Verbindung, über das das zu behandelnde Fluid in das Behältnis 7 gelangt. Es strömt dann über eine Vielzahl von Ausnehmungen 12 in der Hohlwelle 9 zwischen den Scheiben 8 nach außen, um über einen Auslasskanal 13 das Behältnis nach Behandlung zu verlassen. Die Scheiben 8 bilden dabei mit ihren Ober- und Unterseiten Flächen 14, die mit Mikroorganismen behaftet sind. Um bei dieser Vorrichtung die zwischen den Scheiben 8 gebildeten Kanäle freizuhalten und die Schichtdicke der an den Flächen 14 haftenden Mikroorganismen auf einem vorbestimmten Maß zu halten, ist das Paket von Scheiben 8 über die Hohlwelle 9 mittels des Motors 10 rotatorisch angetrieben. Dies kann kontinuierlich oder auch diskontinuierlich, jeweils nur zum Entfernen überschüssiger Mikroorganismen, erfolgen. Je nach Drehzahl des Motors 10 stellt sich eine entsprechend der wirkenden Zentrifugalkräfte bestimmte Schichtdicke ein, die vom Zentrum zum Rand hin abfallen kann.

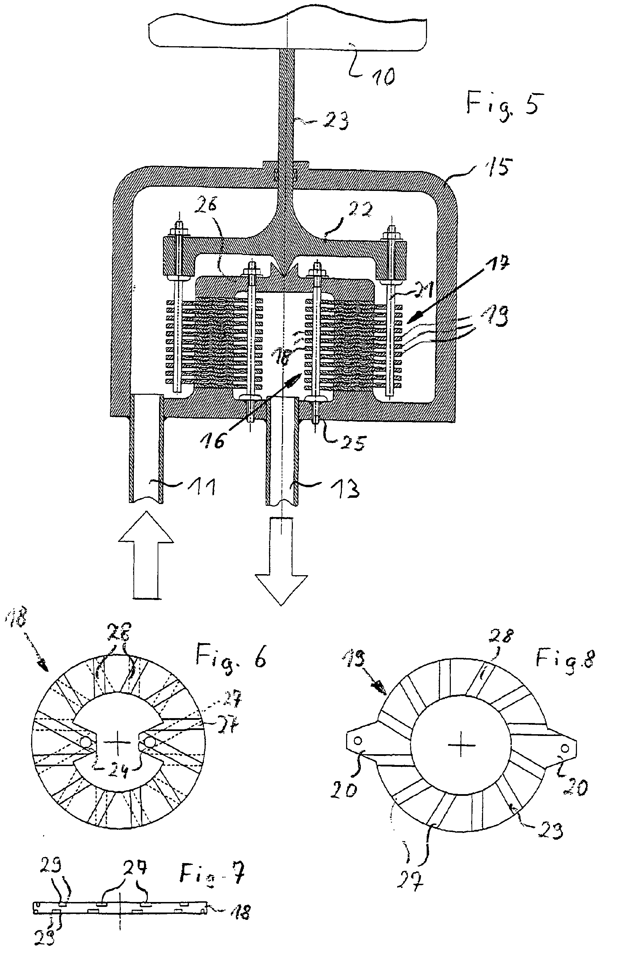

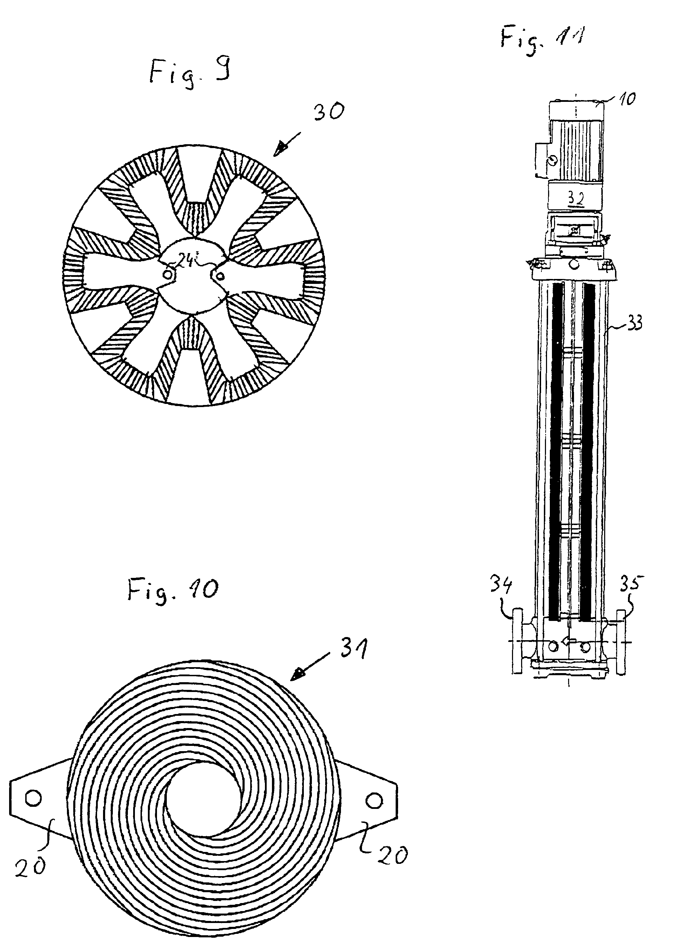

Die anhand der Figuren 5 bis 8 dargestellte erfindungsgemäße Ausführungsvariante weist ebenfalls ein Behältnis 15 mit Einlasskanal 11 und Auslasskanal 13 auf. Innerhalb des Behältnisses 15 sind zwei miteinander kämmende Scheibenstapel 16 und 17 von parallel und mit Abstand zueinander angeordneten ringförmigen Scheiben 18 und 19 vorgesehen. Während die Scheiben 19 (siehe Fig. 8) über am Außenumfang diametral angeordnete Vorsprünge 20 mittels an der Außenseite der Stapel angeordneter Befestigungsbolzen 21 an einem gemeinsamen Träger 22 befestigt sind, der mittels einer Welle 23 mit einem außerhalb des Behältnisses 15 angeordneten Motor 10 verbunden ist, weisen die Scheiben 19 (Fig. 6) des anderen Scheibenstapels 17 am Innenumfang Vorsprünge 24 auf, die über Befestigungsbolzen 25 an einem gemeinsamen Träger 26 sowie am Boden des Behältnisses 7 festgelegt sind.

Die Scheiben 18 und 19 weisen jeweils beidseitig Nuten 27 auf, die im Wesentlichen rechteckigen Querschnitt haben sowie im Wesentlichen radial gerichtet sind, jedoch in unterschiedlichem Winkel, wie Fig. 6 zeigt. Die Scheiben 18 bzw. 19 sind innerhalb der Stapel 16 bzw. 17 so mit Abstand angeordnet, dass die Nuten 27 einer Scheibe kanalbildend von der benachbarten Scheibe abgeschlossen werden, die Scheiben jedoch zueinander leicht bewegbar bleiben. Die Nuten 24 bilden Flächen 28, an denen Mikroorganismen haften, so dass die beiden Scheibenstapel 16 und 17 eine Vielzahl von Kanälen mit einer vergleichsweise großen aktiven Oberfläche bei geringer Baugröße bilden. Die Scheiben 18 und 19 können kostengünstig als Kunststoffspritzgussteile gefertigt sein. Die Durchströmung des Behältnisses erfolgt vom Einlasskanal 11 durch die Nuten 27 zwischen den Scheibenstapeln 16 und 17 hindurch in das frei Zentrum zum Auslasskanal 13 hin.

Die sich beim Betrieb der Vorrichtung auf den Flächen 28 mit wachsender Schichtdicke bildenden Mikroorganismen werden hier mechanisch und vorzugsweise kontinuierlich durch Rotation der Welle 23 entfernt. Während der an inneren Vorsprüngen 24 befestigte Plattenstapel feststeht, rotiert der an den äußeren Vorsprüngen 20 befestigte Plattenstapel, wobei die Kanten 29 der Nuten 27 wie Abstreifer wirken und überschüssige Mikroorganismen lösen, die dann über das durchströmende Fluid mitgeführt und somit entfernt werden.

Während bei den anhand der Figuren 6 bis 8 dargestellen ringförmigen Scheiben 18 und 19 die Nuten 27 im Wesentlichen radial angeordnet sind, zeigen die Scheiben 30 und 31 eine alternative Stapelanordnung, die in gleicher Weise wie anhand der Scheibenstapel 16 und 17 vorbeschrieben miteinander kämmen. Die Scheibe 30 (Fig. 9) ist mit einer Vielzahl von kurzen, aber im Querschnitt vergleichsweise kleinen und im Wesentlichen radialen Kanälen, versehen, die in einer Erhebung vorgesehen sind, die sich etwa sternförmig auf der Scheibe erstreckt. Die Scheiben 31 haben Kanäle, die spiralförmig angeordnet sind. Bei einer Kombination dieser Scheiben 30 und 31 ergibt sich eine sehr konstante Schichtdicke von Mikroorganismen, wobei die Nuten der Scheiben 30 den wesentlichen Strömungsweg bilden, wohingegen die Kanten der Nuten der Scheiben 31 im Wesentlichen die Aufgabe des Abstreifens erfüllen. Diese Anordnung von Scheiben 30 und 31 hat sehr gute Gleiteigenschaften, so dass vergleichsweise hohe Scheibenstapel gebildet werden können.

Während die Figuren 4 und 5 im Wesentlichen den prinzipiellen Vorrichtungsaufbau darstellen, zeigt Fig. 11, wie eine solche Vorrichtung in der Praxis aussehen kann. Es kann hier ein Normmotor 10 mit nachgeschaltetem Getriebe 32 eingesetzt werden, an dem achsgleich in Behältnis 33 angeflanscht ist, das im Wesentlichen rohrförmig ausgebildet und eine Länge von beispielsweise einem Meter aufweisen kann. Innerhalb dieses Rohrabschnitts 33 sind die Scheibenstapel angeordnet. Der hydraulische Anschluss der Vorrichtung erfolgt am unteren Ende mittels zwei inline liegender Flansche 34 und 35 als Einlass und Auslass.

### Bezugszeichenliste

- 1 -: Körper
- 2 -: Flächen
- 3 -: Nuten
- 4 -: Kanal
- 5 -: Mikroorganismen
- 6 -: Abstreifer
- 7 -: Behältnis
- 8 -: Scheiben
- 9 -: Hohlwelle
- 10 -: Motor
- 11 -: Einlasskanal
- 12 -: Ausnehmungen
- 13 -: Auslasskanal
- 14 -: Flächen
- 15 -: Behältnis
- 16 -: Scheibenstapel (18)
- 17 -: Scheibenstapel (19)
- 18 -: Scheiben (Fig. 6)
- 19 -: Scheiben (Fig. 8)
- 20 -: Vorsprünge, außen
- 21 -: Bolzen
- 22 -: Träger
- 23 -: Welle
- 24 -: Vorsprünge, innen
- 25 -: Bolzen
- 26 -: Träger
- 27 -: Nuten
- 28 -: Flächen
- 29 -: Kanten
- 30 -: Scheiben
- 31 -: Scheiben
- 32 -: Getriebe
- 33 -: Behältnis
- 34 -: Flansch
- 35 -: Flansch

## Patentansprüche

1. Vorrichtung zur biologischen Fluidbehandlung, insbesondere Abwasserbehandlung, bei der das Fluid längs von mit Mikroorganismen (5) behafteten Flächen (28) geführt ist, die Teile von um ihre Rotationsachse antreibbaren Scheiben (19, 31) bilden, wobei die Flächen (28) durch in den Scheiben (18, 19, 30, 31) liegende Vertiefungen gebildet sind und die Scheiben (18, 19, 30, 31, 36) so zueinander angeordnet sind, dass die Fluidführung durch die Vertiefungen (27) hindurch erfolgt und eine Vertiefung (27) einer Scheibe (18, 30) durch die benachbarte und relativ dazu bewegbare andere Scheibe (19, 31) kanalbildend begrenzt ist, **dadurch gekennzeichnet, dass** die Vertiefungen durch Nuten (27) in einer Scheibe (18, 19, 30, 31) gebildet sind, die im wesentlichen radial oder zumindest auch radial gerichtet sind und die Kanalführung durch die Nuten (27) von der Innenseite der Scheiben (18, 19, 30, 31) zur Außenseite oder umgekehrt erfolgt.

2. Vorrichtung nach Anspruch 1, **dadurch gekennzeichnet, dass** die mit Mikroorganismen behafteten Flächen porös, rau oder oberflächenstrukturiert sind.

3. Vorrichtung nach einem der vorhergehenden Ansprüche, **dadurch gekennzeichnet, dass** die Scheiben (18, 19, 30, 31) ringförmig ausgebildet und zu Stapeln (16, 17) angeordnet sind.

4. Vorrichtung nach einem der vorhergehenden Ansprüche, **dadurch gekennzeichnet, dass** zwei Scheibenstapel (16, 17) vorgesehen sind, die miteinander kämmen.

5. Vorrichtung nach einem der vorhergehenden Ansprüche, **dadurch gekennzeichnet, dass** ein Scheibenstapel (16) feststehend und der andere (17) um seine Drehachse rotierend antreibbar ist.

6. Vorrichtung nach einem der vorhergehenden Ansprüche, **dadurch gekennzeichnet, dass** die Scheiben (19) des einen Stapels (17) außen angeordnete Vorsprünge (20) aufweisen, mit denen sie im Stapel (19) befestigt sind.

7. Vorrichtung nach einem der vorhergehenden Ansprüche, **dadurch gekennzeichnet, dass** die Scheiben (18) des anderen Stapels (16) innen angeordneten Vorsprünge (24) aufweisen, mit denen sie im Stapel (16) befestigt sind.

## Claims

1. A device for biological fluid treatment, in particular waste-water treatment, with which the fluid is led along surfaces (28) coated with microorganisms (5), which form parts of disks (19, 31) drivable about their rotation axis, wherein the surfaces (28) are formed by recesses lying in the disks (18, 19, 30, 31), and the disks (18, 19, 30, 31, 36) are arranged to one another such that the leading of the fluid is effected through the recesses (27), and a recess (27) of one disk (18, 30) is delimited in a channel-forming manner by the adjacent other disk (19, 31) movable relative to this, **characterised in that** the recesses are formed by grooves (27) in a disk (18, 19, 30, 31) which are directed essentially radially or are at least also radially directed, and the leading of the channel through the grooves (27) is effected from the inner side of the disks (18, 19, 30, 31) to the outer side or vice versa.

2. A device according to claim 1, **characterised in that** the surfaces coated with microorganisms are porous, rough or surface-structured.

3. A device according to one of the preceding claims, **characterised in that** the disks (18, 19, 30, 31) are designed annularly and are arranged into stacks (16, 17).

4. A device according to one of the preceding claims, **characterised in that** there are provided two disk stacks (16, 17) which mesh with one another.

5. A device according to one of the preceding claims, **characterised in that** one disk stack (16) is stationary and the other (17) is rotatingly drivable about its rotational axis.

6. A device according to one of the preceding claims, **characterised in that** the disks (19) of the one stack (17) comprise projections (20) arranged on the outside, with which they are fastened in the stack (19).

7. A device according to one of the preceding claims, charactersied in that the disks (18) of the other stack (16) comprise projections (24) arranged on the inside, with which they are fastened in the stack (16).

## Revendications

1. Dispositif de traitement biologique de fluide, en particulier de traitement des eaux résiduaires, dans lequel le fluide est guidé le long de surfaces (28) garnies de microorganismes (5), qui forment des parties de disques (19, 31) pouvant être entraînés autour de leur axe de rotation, dans lequel les surfaces (28) sont formées par des creux se trouvant dans les disques (18, 19, 30, 31) et les disques (18, 19, 30, 31, 36) sont disposés les uns par rapport aux autres de façon telle que le guidage de fluide se fait à travers les creux (27) et qu'un creux (27) d'un disque (18, 30) est délimité, en formant un canal, par les autres disques (19, 31) voisins et mobiles par rapport à lui, **caractérisé en ce que** les creux sont formés par des rainures (27) [pratiquées] dans un disque (18, 19, 30, 31), qui sont orientées essentiellement dans la direction radiale ou au moins aussi dans la direction radiale, et **en ce que** le guidage en canal se fait par les rainures (27) depuis le côté intérieur des disques (18, 19, 30, 31) vers le côté extérieur, ou inversement.

2. Dispositif selon la revendication 1, **caractérisé en ce que** les surfaces garnies de microorganismes sont poreuses, rugueuses ou structurées en surface.

3. Dispositif selon l'une des revendications précédentes, **caractérisé en ce que** les disques (18, 19, 30, 31) ont une forme circulaire et sont disposés en piles (16, 17).

4. Dispositif selon l'une des revendications précédentes, **caractérisé en ce que** sont prévues deux piles de disques (16, 17) qui s'engrènent les uns avec les autres.

5. Dispositif selon l'une des revendications précédentes, **caractérisé en ce qu'**une pile de disques (16) est fixe et que l'autre (17) peut être entraînée de façon à tourner autour de son axe de rotation.

6. Dispositif selon l'une des revendications précédentes, **caractérisé en ce que** les disques (19) d'une pile (17) présentent des pattes (20) disposées à l'extérieur et avec lesquelles ils sont fixés en pile (19).

7. Dispositif selon l'une des revendications précédentes, **caractérisé en ce que** les disques (18) de l'autre pile (16) présentent des saillies (24) disposées à l'intérieur et avec lesquelles ils sont fixés en pile (16).
